# EUROPÄISCHE PATENTSCHRIFT

(11) **EP 1 470 172 B1**
(45) Veröffentlichungstag und Bekanntmachung des Hinweises auf die Patenterteilung: **16.11.2016**
(21) Anmeldenummer: 02793026.2
(22) Anmeldetag: 16.12.2002
(51) Int. Cl.: C08G 18/10, C08G 18/32, C08G 18/48

(54) **POLYURETHANZUSAMMENSETZUNG**
POLYURETHANE COMPOSITION
COMPOSITION POLYURETHANNE

(30) Priorität: 18.01.2002 EP 02001289
(43) Veröffentlichungstag der Anmeldung: 27.10.2004
(73) Patentinhaber: Sika Technology AG, 6340 Baar (CH)
(72) Erfinder: BURCKHARDT, Urs, CH-8057 Zürich (CH); STADELMANN, Ursula, CH-8046 Zürich (CH)
(74) Vertreter: Isler, Jörg
(86) Internationale Anmeldenummer: PCT/EP2002/014295
(87) Internationale Veröffentlichungsnummer: WO 2003/059977

(56) Entgegenhaltungen:
- EP-A- 0 254 177
- EP-A- 0 469 751
- US-A- 6 103 850
- US-A- 6 136 942

## Beschreibung

### Technisches Gebiet

Die Erfindung betrifft Zusammensetzungen, enthaltend spezielle hochmolekulare Polyurethanprepolymere, hergestellt ausgehend von speziellen vorwiegend linearen langkettigen Polyoxyalkylenpolyolen mit niedrigem Ungesättigtheitsgrad und Polyaldiminen.

### Stand der Technik

Polyurethane werden eingesetzt unter anderem als einkomponentige, feuchtigkeitshärtende, elastische Dichtstoffe, Klebstoffe und Beschichtungen. Ueblicherweise enthalten sie ein Polyurethanprepolymer, hergestellt aus Polyolen und Polyisocyanaten im stöchiometrischen Ueberschuss, welches anschliessend mit weiteren Komponenten vermengt und bis zum Gebrauch unter Ausschluss von Feuchtigkeit aufbewahrt wird. Diese an sich bekannten Systeme weisen einige Nachteile auf. Bei der Reaktion der Isocyanatgruppen durch die Reaktion mit Wasser, zum Beispiel aus der Luft (Luftfeuchtigkeit) entsteht eine bestimmte Menge CO₂-Gas, abhängig vom Isocyanatgehalt der Mischung. Je nach Formulierung und Applikationsbedingungen kann das gebildete CO₂-Gas zu Blasen im ausgehärteten Produkt führen. Diese unerwünschte Bildung von Blasen wird durch eine Reihe von Faktoren begünstigt, nämlich einen hohen Gehalt an Isocyanatgruppen in der Zusammensetzung, eine relativ niedrige Viskosität, eine schnelle Aushärtungsgeschwindigkeit sowie einen porösen Untergrund. Ein weiterer Nachteil ist die relativ enge Limitierung der mechanischen Festigkeiten, welche mit solchen einkomponentigen Zusammensetzungen nach ihrer Aushärtung erreicht werden. Einerseits sind die mechanischen Festigkeiten limitiert, welche sich mit einem bestimmten Prepolymer an sich erreichen lassen. Für eine deutliche Veränderung der mechanische Werte nach oben oder nach unten muss jeweils ein eigenes, speziell für diese gewünschten mechanischen Eigenschaften formuliertes Prepolymer eingesetzt werden. Andererseits ergibt sich bei der Formulierung von Zusammensetzungen mit möglichst hohen Festigkeiten eine zusätzliche Limitierung aufgrund der Blasenproblematik und hohen Viskositäten. Die zur Erreichung hoher Festigkeiten erforderlichen Prepolymere weisen entweder aufgrund hoher Funktionalität (deutlich höher als 2) oder durch Vorverkettung kürzerkettiger Diole mittels Diisocyanaten zu längerkettigen (und den dadurch hohen Konzentrationen an Urethan-Gruppen) sehr hohe Viskositäten auf, was ihre Verarbeitung stark erschwert, oder sie enthalten hohe Anteile an freien Isocyanatgruppen, wodurch sie bei der Aushärtung sehr stark zur Bildung von Blasen neigen, oder eine Kombination von beidem. Sehr hohe Zugfestigkeiten, beispielsweise im Bereich von 10 MPa und mehr, sind mit einkomponentigen feuchtigkeitshärtenden Polyurethanen mit dem heutigen Stand der Technik deshalb kaum praxistauglich zu erreichen.

Ein weiterer Nachteil besteht bei der Anwendung von Polyurethanen als weichelastische Baudichtstoffe, welche für das Abdichten von Fugen im Baugewerbe eingesetzt werden. Ein solcher Dichtstoff muss einerseits einen sehr niedrigen Elastizitätsmodul aufweisen, und gleichzeitig eine hohe Dehnung und ein gutes Rückstellvermögen haben. Solche Produkte weisen nach dem Stand der Technik normalerweise eine recht klebrige Oberfläche auf, welche zu unschönen Verschmutzungen neigt.

Als Alternative gibt es zweikomponentige Systeme, welche aber den bekannten Nachteil des Mischvorgangs aufweisen, welcher sowohl einen Mehraufwand für den Anwender bedeutet als auch eine nicht zu unterschätzende Fehlerquelle bei der Anwendung des Produktes darstellt.

Als Polyole für die Herstellung von Polyurethanprepolymeren für sehr flexible Zusammensetzungen werden üblicherweise Polyoxyalkylenpolyole verwendet, hauptsächlich Polypropylenglykole. Ueblicherweise werden diese durch Basen-Katalyse hergestellt. Aus dem basen-katalysierten Polymerisationsprozess resultieren jedoch Polyole mit einem relativ hohen Anteil an einfach-hydroxyfunktionellen Molekülen, sogenannten Monolen, die am einen Kettenende eine Doppelbindung tragen. Mit steigendem Molekulargewicht des Polyols nimmt der Monol-Gehalt und somit der Ungesättigtheitsgrad stark zu. Bei der Verwendung linearer Polyole führt eine niedrige OH-Funktionalität (d.h. deutlich unter dem Idealwert 2), also ein hoher Ungesättigtheitsgrad, zu schlechten mechanischen Eigenschaften im ausgehärteten Zustand. Ausgehend von Polyolen, welche durch Basen-Katalyse hergestellt wurden, ist deshalb das Erreichen von hohen Molekulargewichten in Polyurethanprepolymeren nur durch das Zusammenhängen von relativ kurzkettigen Diolen mittels Polyisocyanaten möglich, was zu Prepolymeren mit unerwünscht hohen Viskositäten führt.

Spezielle Polyoxyalkylenpolyole mit einem hohen Molekulargewicht und einem sehr niedrigen Grad an Ungesättigtheit, hergestellt mit Hilfe sogenannter Double Metal Cyanide Complex Katalysatoren, kurz DMC-Katalysatoren genannt, wurden in den 60er Jahren entwickelt und beschrieben bei US 3,427,256, US 3,427,334, US 3,427,335, US 3,829,505 und US 3,941,849. Diese Polyole weisen einen sehr niedrigen Ungesättigtheitsgrad auf, sowie eine OH-Funktionalität von nur wenig unterhalb von 2.

Seither wurde die Technologie der DMC-Katalyse laufend verbessert und entsprechende Produkte kommerzialisiert. Die Patentschriften WO99 / 29752, US 5,849,944 und US 6,036,879 beispielsweise beschreiben Anwendungen solcher Polyole als zweikomponentige Giess-Elastomere.

Durch die Verwendung dieser speziellen Polyole in einkomponentigen, feuchtigkeitshärtenden elastischen Dicht- und Klebstoffen ist es zwar möglich, hochmolekulare Polyurethanprepolymere mit einer niedrigen Viskosität herzustellen. Es bestehen aber andere Schwierigkeiten, welche bis jetzt nicht befriedigend gelöst werden konnten. So sind hochmolekulare Prepolymere, aufgebaut auf den erwähnten hochmolekularen Polyolen, zwar niedrig in der Viskosität im Vergleich zu entsprechenden hochmolekularen Prepolymeren, in welchen kürzerkettige Polyole mit Diisocyanaten zu längeren Ketten zusammengehängt wurden; sie sind jedoch auch wesentlich hydrophober aufgrund der niedrigeren Konzentration an Urethangruppen. Dies führt dazu, dass diese hydrophoberen Prepolymere mit Feuchtigkeit deutlich langsamer aushärten, da das Wasser nur in geringer Menge zur Verfügung steht, und dass andererseits die Anfälligkeit auf Blasenbildung durch das bei der Aushärtung mit Feuchtigkeit abgespaltene CO₂-Gas höher ist, da dieses vom hydrophoberen Polymer deutlich schlechter gelöst wird. Ein für industrielle Anwendungen geeigneter Klebstoff muss aber schnell aushärten, und zwar bei meist nur geringer freier, zur Aufnahme des benötigten Wassers aus der Luft verfügbaren Oberfläche. Zur Erreichung der oft geforderten hohen mechanischen Festigkeiten ist ausserdem ein hoher Gehalt an Isocyanat erforderlich. Dadurch entsteht bei der Aushärtung relativ viel CO₂, was, wie bereits beschrieben, zu dem Problem der Blasenbildung bei der Aushärtung führt.

US 5,124,425 beschreibt die Anwendung solcher Polyole, hergestellt mittels DMC-Katalyse, unter anderem als einkomponentige feuchtigkeitshärtende oder zweikomponentige Polyurethane. In den Beispielen werden Zugfestigkeiten bis 1.7 MPa erreicht. Deutlich höhere Festigkeiten lassen sich auf dem beschriebenen Weg nicht erreichen, da die Problematik der Blasenbildung bei höheren Gehalten an Isocyanatgruppen nicht gelöst ist.

Um die Bildung von Blasen in einkomponentigen Polyurethan-Dicht-und -Klebstoffen zu vermeiden, gibt es verschiedene Möglichkeiten. Einerseits können ein Teil oder alle Isocyanatendgruppen des Prepolymers zu Alkoxysilan-Endgruppen umgesetzt werden, indem diese mit beispielsweise einem Aminoalkyl-Alkoxysilan umgesetzt werden. Dabei entsteht ein Alkoxysilan-endständiges Prepolymer, welches ebenfalls durch Kontakt mit Feuchtigkeit via Hydrolyse der Alkoxysilangruppen und anschliessende Kondensation der Silanolgruppen zu Siloxangruppierungen aushärtet. Bei diesem Aushärtungsmechanismus entsteht kein CO₂, und es bilden sich dementsprechend auch weniger oder keine Blasen. Die Vernetzung über Alkoxysilangruppen führt jedoch zu Produkten mit geringer Bruchdehnung und niedrigen Festigkeiten. EP 1 093 482 beschreibt Polyurethane auf der Basis von Polyolen mit hohem Molekulargewicht, enger Molgewichtsverteilung und einer OH-Funktionalität nahe bei 2. Zur Vermeidung von Blasen können die Isocyanat-Endgruppen des Prepolymers ganz oder teilweise mit Organosilanen wie beispielsweise Aminoalkyl-Alkoxysilanen umgesetzt sein. Wie bereits erwähnt, lassen sich auf diese Weise keine Polyurethane mit hohen Dehnungen und Festigkeiten formulieren. Dementsprechend weist das einzige Beispiel dieser Patentschrift, ein System, welches vorwiegend über Alkoxysilane aushärtet, eine Zugfestigkeit von nur 0.49 MPa bei einer Bruchdehnung von 276% auf.

Polyaldimine sind in der Polyurethanchemie bekannte Verbindungen, beschrieben beispielsweise bei US 3,420,800 und US 3,567,692. Aus isocyanatgruppenhaltigen Polyurethanprepolymeren und Polyaldiminen lassen sich einkomponentige Produkte formulieren. Bei Kontakt mit Feuchtigkeit hydrolysieren die Polyaldimine zu den entsprechenden Aldehyden und Polyaminen, worauf letztere mit den Isocyanatgruppen des Prepolymers reagieren und dieses damit ohne Freisetzung von CO₂ aushärten. Solche Systeme wurden beispielsweise beschrieben bei US 3,932,357, US 4,009,307, US 4,720,535, US 4,853,454, US 5,087,661 und EP 985 693.

### Darstellung der Erfindung

Aufgabe der vorliegenden Erfindung war es, Zusammensetzungen zur Verfügung zu stellen, welche ausgehend von nur einem oder wenigen hochmolekularen Polyurethanprepolymeren eine grosse Bandbreite von mechanischen Festigkeiten abdecken, und welche gegenüber dem Stand der Technik zusätzliche Vorteile aufweisen. So sind einerseits Produkte erwünscht, die bei tiefem Elastizitätsmodul, hoher Dehnung und gutem Rückstellvermögen eine sehr trockene Oberfläche aufweisen und sich damit eignen als Baudichtstoffe für das Abdichten von Fugen; andererseits besteht ein Bedarf nach hochflexiblen Produkten, die schnell und blasenfrei aushärten, hohe bis sehr hohe mechanische Festigkeiten aufweisen und sich damit eignen als Klebstoffe für industrielle Anwendungen aller Art. Diese Zusammensetzungen sollen gleichzeitig eine sehr niedrige Verarbeitungsviskosität aufweisen, damit sich Produkte formulieren lassen, welche sich mit relativ wenig Kraftaufwand applizieren lassen, bei der Applikation einen kurzen Fadenabriss aufweisen (dadurch wird die Umgebung beim Absetzen und Wegziehen der Applikationsspitze nicht mit dem Produkt verschmutzt), und keinen oder nur einen geringen Gehalt an Lösungsmitteln und Weichmachern aufweisen, was vorteilhaft ist sowohl für die Haftungseigenschaften des Produktes, als auch unter oekologischen Gesichtspunkten, da sowohl die Lösungsmittel (VOC = volatile organic compounds) als auch die Weichmacher, meist Phthalatverbindungen, für die Umwelt nicht unproblematisch sind. Zudem neigen allfällig vorhandene Weichmacher dazu, bei Applikationen auf porösen Untergründen wie Natursteinen und beim Ueberstreichen mit Anstrichen aus der Zusammensetzung zu migrieren. Dadurch können beispielsweise neben einer Fuge unschöne Verfärbungen des Untergrundes auftreten, oder ein Anstrich wird weich und klebrig.

Ueberraschenderweise wurde gefunden, dass eine Lösung dieser Probleme durch die Kombination von speziellen, linearen hochmolekularen Polyurethanprepolymeren A, hergestellt ausgehend von speziellen, vorwiegend langkettigen Polyoxyalkylenpolyolen mit einem niedrigen Ungesättigtheitsgrad mit Polyaldiminen B möglich ist.

Mit der hier beschriebenen Kombination aus speziellem, hochmolekularem Polyurethanprepolymer, hergestellt ausgehend von speziellen linearen, langkettigen Polyoxyalkylenpolyolen mit niedrigem Ungesättigtheitsgrad und Polyaldiminen ist es möglich, durch Variation und Kombination verschiedener Polyaldimine mit nur wenigen Prepolymeren verschiedene hochflexible Produkte mit einem sehr breiten Spektrum an mechanischer Festigkeit (Zugfestigkeit beispielsweise im Bereich von ungefähr 1 bis über 20 MPa) und mit Bruchdehnungen bis über 1000% zu formulieren, welche unter Ausschluss von Feuchtigkeit in einer geeigneten Verpackung lagerstabil sind, eine niedrige Verarbeitungsviskosität aufweisen, bei Kontakt mit Feuchtigkeit schnell und blasenfrei aushärten und im ausgehärteten Zustand eine sehr trockene Oberfläche haben.

Mit derartigen Zusammensetzungen kann die Anzahl der in einem Produktionsbetrieb benötigten Prepolymere für die Formulierung unterschiedlicher Polyurethan-Dichtstoffe, -Klebstoffe und -Beschichtungen, welche in Bezug auf das mechanische Eigenschaftsprofil höchst unterschiedlichen Anforderungen genügen, stark reduziert werden. Da die Handhabung und die Lagerung verschiedener Prepolymere mit ihrer hohen Viskosität, ihrer Empfindlichkeit gegenüber Feuchtigkeit und ihrem Platzbedarf für einen industriellen Produktionsbetrieb mit hohem Aufwand verbunden ist, ist die Verkleinerung der Anzahl benötigter Prepolymere für die Herstellung unterschiedlicher Produkte von grossem Vorteil und stellt Fortschritt in der Technologie dar. Zudem ist es mit solchen Zusammensetzungen möglich, mit einem minimalen Satz an Prepolymeren sowohl weichelastische Baudichtstoffe mit hoher Dehnung und gutem Rückstellvermögen sowie einer sehr trockenen Oberfläche zu formulieren, als auch hochfeste elastische Klebstoffe mit Zugfestigkeiten von bis zu 20 MPa und mehr herzustellen, die schnell und blasenfrei aushärten. Die stets niedrige Viskosität derartiger Zusammensetzungen ermöglicht es ausserdem, gut verarbeitbare Lösungsmittel- und Weichmacher-arme oder -freie Produkte herzustellen, was in Bezug auf ihre Haftungseigenschaften, ihre Migrationsbeständigkeit und unter oekologischen Gesichtspunkten vorteilhaft ist.

Ein zusätzlicher Vorteil gegenüber dem Stand der Technik ist, dass die ausgehärteten beschriebenen Zusammensetzungen hydrophober sind als solche, die auf konventionellen Polyolen basieren. Deshalb weisen sie weniger unerwünschte Wasseraufnahme, dadurch wiederum weniger Quellung und eine geringere hydrolytische Empfindlichkeit auf.

Ausserdem ist es gemäss einer bevorzugten Ausführungsform von Zusammensetzungen möglich, ganz auf die Verwendung von metallorganischen - insbesondere zinnhaltigen - Katalysatoren zu verzichten. Dadurch ergeben sich höhere thermische Beständigkeiten des ausgehärteten Materials durch eine langsamere Urethan-Rückspaltung; und ausserdem ist dies ein ökologischer Vorteil, aufgrund der potentiellen Giftigkeit und Umweltgefährdung der Metalle, insbesondere der zinnorganischen Verbindungen.

Die vorliegende Erfindung betrifft Zusammensetzungen, welche mindestens ein Polyurethanprepolymer A mit Isocyanatendgruppen und mindestens ein Polyaldimin B umfassen, wobei das Polyurethanprepolymer A aus mindestens einem Polyol A1 und gegebenenfalls mindestens einem Polyol A2 sowie Polyisocyanaten hergestellt wird. Das Polyol A1 ist ein lineares Polyoxyalkylenpolyol und weist einen Ungesättigtheitsgrad von <0.02 mEq/g auf, während das Polyol A2 in einer Menge von 0 - 30 Gewichts-%, vorzugsweise 0 - 20 Gewichts-%, insbesondere 0 - 10 Gewichts-% vorliegt, bezogen auf die Totalmenge von A1+A2. Zusätzlich zu den genannten Komponenten kann eine Zusammensetzung gemäss einer bevorzugten Ausführungsform noch eine oder mehrere der folgenden Komponenten enthalten: Weichmacher, Lösungsmittel, Füllstoffe, Pigmente, Katalysatoren, Rheologie-Modifizierer wie beispielsweise Verdickungsmittel, Haftvermittler, Trocknungsmittel, Antioxidantien, Lichtschutzmittel und andere, in der Polyurethanindustrie übliche Additive.

Zusätzlich wird die Verwendung dieser Zusammensetzung als Klebstoff, Dichtstoff, Beschichtung oder Belag beschrieben. Weiterhin zur Verfügung gestellt werden Verfahren zum Herstellen der Zusammensetzung sowie Verfahren zum Verkleben, Abdichten oder Beschichten. Schliesslich werden Artikel beschrieben, deren Oberfläche zumindest partiell mit einer solchen Zusammensetzung kontaktiert worden ist.

### Weg zur Ausführung der Erfindung

Die vorliegende Erfindung betrifft Zusammensetzungen, welche mindestens ein Polyurethanprepolymer A mit Isocyanatendgruppen und mindestens ein Polyaldimin B umfassen, wobei das Polyurethanprepolymer A aus mindestens einem Polyol A1 und gegebenenfalls mindestens einem Polyol A2 sowie Polyisocyanaten hergestellt wird. Das Polyol A1 ist ein lineares Polyoxyalkylenpolyol und weist einen Ungesättigtheitsgrad von <0.02 mEq/g auf, während das Polyol A2 in einer Menge von 0 - 30 Gewichts-%, vorzugsweise 0 - 20 Gewichts-%, insbesondere 0 - 10 Gewichts-% vorliegt, bezogen auf die Totalmenge von A1+A2.

Das Polyurethanprepolymer A wird hergestellt durch Umsetzung des Polyols mit einem Polyisocyanat, wobei das Polyol zu mindestens 70 Gew.-%, bevorzugt zu mindestens 80 Gew.-% aus mindestens einem linearen Polyol A1 besteht. Diese Umsetzung kann dadurch erfolgen, dass das Polyol und das Polyisocyanat mit üblichen Verfahren, beispielsweise bei Temperaturen von 50 bis 100°C, gegebenenfalls unter Mitverwendung geeigneter Katalysatoren, zur Reaktion gebracht werden, wobei das Polyisocyanat im stöchiometrischen Ueberschuss eingesetzt wird. Als Reaktionsprodukt entsteht das Polyurethanprepolymer A mit Isocyanatendgruppen.

Das Polyol A1 ist ein lineares Polyoxyalkylenpolyol mit einem Gesamt-Ungesättigtheitsgrad von <0.02 mEq/g und bevorzugt <0.017 mEq/g. Das Polyol A1 weist in einer bevorzugten Ausführungsform ein Molekulargewicht von 2'000 bis 30'000 g/mol auf.

Bei diesen linearen Polyoxyalkylenpolyolen handelt es sich um Umsetzungsprodukte eines difunktionellen Startermoleküls in Form eines kurzen Diols mit Alkylenoxiden wie 1,2-Propylenoxid oder Ethylenoxid, wobei die Alkylenoxide einzeln, alternierend nacheinander oder als Mischungen verwendet werden können. Als Polymerisationskatalysator dient üblicherweise ein sogenannter Double Metal Cyanid Komplex, kurz DMC-Katalysator genannt. Solche Polyole sind kommerziell erhältlich zum Beispiel unter den Namen Acclaim^{®} und Arcol^{®} der Firma Bayer, Preminol^{®} der Firma Asahi Glass, Alcupol^{®} der Firma Repsol sowie Poly-L^{®} der Firma Arch Chemicals. Durch die Verwendung eines DMC-Katalysators bei ihrer Herstellung weisen sie einen sehr niedrigen Ungesättigtheitsgrad auf. Das bedeutet, dass der Gehalt dieser Polyole an Polyoxypropylenen, welche an einem Kettenende eine Doppelbindung und am anderen Kettenende eine OH-Gruppe als Endgruppen tragen (sogenannte "Monole"), sehr niedrig ist. Monole entstehen dadurch, dass Propylenoxid während der Propoxylierung zu Allylalkohol isomerisiert, was die Bildung von allyl-terminierten Polyoxypropylenen zur Folge hat. Der Grad an Ungesättigtheit wird gemessen nach ASTM D-2849-69, "Testing Urethane Foam Polyol Raw Materials", und angegeben als Milliequivalent Ungesättigtheit pro Gramm Polyol (mEq/g). Der Gesamt-Ungesättigtheitsgrad (mEq/g) dieser Polyole entspricht dem Gehalt an Monol. Aus dem mittleren Molekulargewicht (oder auch mit dem Gesamt-OH-Gehalt) und dem Gesamt-Ungesättigtheitsgrad lässt sich die mittlere OH-Funktionalität des Polyols berechnen. Bevorzugte Polyole sind reine Polyoxypropylendiole sowie sogenannte "EO-endcapped" (ethylene oxide-encapped) Polyoxypropylendiole. Letztere sind spezielle Polyoxypropylenpolyoxyethylendiole, die dadurch erhalten werden, dass reine Polyoxypropylendiole nach Abschluss der Polypropoxylierung mit Ethylenoxid alkoxyliert werden und damit primäre Hydroxylgruppen aufweisen. Es können auch Mischungen der genannten Polyole verwendet werden.

Für die restlichen 0 bis 30 Gew.-% des Polyols kommen die folgenden, in der Polyurethanchemie bestens bekannten Polyole A2 in Frage, welche nicht vom Typ des Polyols A1 sind:
- Polyoxyalkylenpolyole mit einem höheren Gesamt-Ungesättigtheitsgrad als 0.04 mEq/g und/oder einem niedrigen Molekulargewicht und/oder einer OH-Funktionalität von grösser als 2, insbesondere solche mit einem Gesamt-Ungesättigtheitsgrad <0.1 mEq/g und/oder einem Molekulargewicht von 400 bis 2'000 und/oder solche mit einer OH-Funktionalität grösser als 2 und bis etwa 3, welche Polyalkoxylierungsprodukte eines Startermoleküls mit Ethylenoxid, 1,2-Propylenoxid, 1,2- und 2,3-Butylenoxid, Tetrahydrofuran oder Mischungen davon sind;
- Polyhydroxyterminierte Polybutadien-Polyole;
- Polyesterpolyole, hergestellt beispielsweise aus zwei- bis dreiwertigen Alkoholen wie beispielsweise 1,2-Ethandiol, Diethylenglykol, 1,2-Propandiol, Dipropylenglykol, 1,4-Butandiol, 1,5-Pentandiol, 1,6-Hexandiol, Neopentylglykol, Glycerin, 1,1,1-Trimethylolpropan oder Mischungen der vorgenannten Alkohole mit organischen Dicarbonsäuren oder deren Anhydride oder Ester wie beispielsweise Bernsteinsäure, Glutarsäure, Adipinsäure, Korksäure, Sebacinsäure, Decandicarbonsäure, Maleinsäure, Fumarsäure, Phthalsäure, Isophthalsäure, Terephthalsäure und Hexahydrophthalsäure oder Mischungen der vorgenannten Säuren, sowie Polyesterpolyole aus Lactonen, beispielsweise ε-Caprolacton;
- Polycarbonatpolyole, wie sie durch Umsetzung beispielsweise der oben genannten - zum Aufbau der Polyesterpolyole eingesetzten - Alkohole mit Dialkylcarbonaten, Diarylcarbonaten oder Phosgen zugänglich sind;
- ferner niedermolekulare hydroxylgruppenhaltige Verbindungen wie beispielsweise 1,2-Ethandiol, 1,2- und 1,3-Propandiol, Neopentylglykol, Diethylenglykol, Triethylenglykol, die isomeren Dipropylenglykole und Tripropylenglykole, die isomeren Butandiole, Pentandiole, Hexandiole, Heptandiole, Octandiole, Nonandiole, Decandiole, Undecandiole, 1,3- und 1,4-Cyclohexandimethanol, hydriertes Bisphenol A, 1,1,1-Trimethylolethan, 1,1,1-Trimethylolpropan und Glycerin,
- sowie Mischungen der vorgenannten hydroxylgruppenhaltigen Verbindungen.

Für die Herstellung des Polyurethanprepolymers werden Polyisocyanate verwendet. Bevorzugte Polyisocyanate sind Diisocyanate. Als Beispiele seien die folgenden, in der Polyurethanchemie bestens bekannten Isocyanate erwähnt:
2,4- und 2,6-Toluylendiisocyanat (TDI) und beliebige Gemische dieser Isomeren, 4,4'-Diphenylmethandiisocyanat (MDI), die stellungsisomeren Diphenylmethandiisocyanate sowie Oligomere und Polymere dieser Isocyanate, 1,3- und 1,4-Phenylendiisocyanat, 1,6-Hexamethylendiisocyanat, 2,2,4- und 2,4,4-Trimethyl-1,6-hexamethylendiisocyanat, 1,12-Dodecamethylendiisocyanat, Cyclohexan-1,3- und 1,4-diisocyanat und beliebige Gemische dieser Isomeren, 1-Isocyanato-3,3,5-trimethyl-5-isocyanatomethylcyclohexan (=Isophorondiisocyanat oder IPDI), Perhydro-2,4'- und -4,4'-Diphenylmethandiisocyanat, 1,3- und 1,4-Tetramethylxylylendiisocyanat, sowie beliebige Mischungen der vorgenannten Isocyanate.

Die Polyaldimine B werden hergestellt ausgehend von Polyaminen und Aldehyden durch eine Kondensationsreaktion unter Abspaltung von Wasser. Solche Kondensationsreaktionen sind bestens bekannt und beschrieben, beispielsweise in Houben-Weyl, "Methoden der organischen Chemie", Vol. XI/2, Seite 73 ff. Es werden dabei equivalente Mengen von Aldehydgruppen R¹-CH=O mit primären Aminogruppen R²-NH₂ zu Aldimingruppierungen R¹-CH=N-R² umgesetzt. R¹ und R² stehen beispielsweise für einen aliphatischen, cycloaliphatischen oder aromatischen Rest, welcher beispielsweise Estergruppierungen, Carbonsäuregruppierungen, Ethergruppierungen und Heteroatome sowie weitere Iminogruppen enthalten kann. Beispielsweise stehen R¹ und R² für die Reste der weiter unten aufgezählten Polyamine (R²) beziehungsweise Aldehyde (R¹).

Als Polyaldimin B können auch Mischungen verschiedener Polyaldimine verwendet werden, insbesondere Mischungen verschiedener Polyaldimine hergestellt mit Hilfe von verschiedenen Polyaminen, umgesetzt mit verschiedenen oder gleichen Aldehyden, insbesondere auch Polyaldimine hergestellt mit Hilfe von Polyaminen verschiedener Aminofunktionalitäten.

Als Polyamine kommen in der Polyurethanchemie bestens bekannte Polyamine in Frage, wie sie unter anderem für zweikomponentige Polyurethane verwendet werden. Als Beispiele seien die folgenden erwähnt:
Aliphatische Polyamine wie Ethylendiamin, 1,2- und 1,3-Propandiamin, 2-Methyl-1,2-propandiamin, 2,2-Dimethyl-1,3-propandiamin, 1,3- und 1,4-Butandiamin, 1,3- und 1,5-Pentandiamin, 1,6-Hexandiamin, 2,2,4- und 2,4,4-Trimethylhexamethylendiamin und Mischungen davon, 1,7-Heptandiamin, 1,8-Octandiamin, 4-Aminomethyl-1,8-octandiamin, 1,9-Nonandiamin, 1,10-Decandiamin, 1,11-Undecandiamin, 1,12-Dodecandiamin, Methyl-bis-(3-amino-propyl)amin, 1,5-Diamino-2-methylpentan, 1,3-Diaminopentan (DAMP), 2,5-Dimethyl-1,6-hexamethylendiamin, cycloaliphatische Polyamine wie 1,3- und 1,4-Diaminocyclohexan, Bis-(4-aminocyclohexyl)-methan, Bis-(4-amino-3-methylcyclohexyl)-methan, Bis-(4-amino-3-ethylcyclohexyl)-methan, Bis-(4-amino-3,5-dimethylcyclohexyl)-methan, 1-Amino-3-aminomethyl-3,5,5-tri-methylcyclohexan (= Isophorondiamin oder IPDA), 2- und 4-Methyl-1,3-diaminocyclohexan und Mischungen davon, 1,3- und 1,4-Bis-(aminomethyl)-cyclohexan, 1-Cyclohexylamino-3-aminopropan, 2,5(2,6)-Bis-(aminomethyl)-bicyclo[2.2.1]heptan (NBDA, hergestellt von Mitsui Chemicals), 3(4),8(9)-Bis-(aminomethyl)-tricyclo[5.2.1.0^{2,6}]decan (TCD-Diamin^{®}, hergestellt von Celanese Chemicals), 3,9-Bis-(3-aminopropyl)-2,4,8,10-tetraoxaspiro[5.5]-undecan, 1,3- und 1,4-Xylylendiamin, Ethergruppen-haltige aliphatische Polyamine wie Bis-(2-aminoethyl)ether, 4,7-Dioxadecan-1,10-diamin, 4,9-Dioxadodecan-1,12-diamin und höhere Oligomere davon, Polyoxyalkylen-Polyamine mit einer Aminofunktionalität von theoretisch 2 oder 3, erhältlich unter dem Namen Jeffamine^{®}, hergestellt von Huntsman Chemicals, sowie Mischungen der vorgenannten Polyamine.

Bevorzugte Polyamine sind 1,6-Hexamethylendiamin, 1,5-Diamino-2-methylpentan, DAMP, IPDA, 4-Aminomethyl-1,8-octandiamin, 1,3-Xylylendiamin, 1,3-Bis-(aminomethyl)cyclohexan, Bis-(4-aminocyclohexyl)-methan, Bis-(4-amino-3-methylcyclohexyl)-methan, TCD-Diamin^{®}, die Jeffamine^{®}-Typen Jeffamine^{®} EDR-148, Jeffamine^{®} D-230, Jeffamine^{®} D-400 und Jeffamine^{®} T-403, sowie insbesondere Mischungen von zwei oder mehr der vorgenannten Polyamine.

Als Aldehyde für die Kondensationsreaktion mit den Polyaminen kommen beispielsweise die folgenden in Frage:
Aliphatische oder cycloaliphatische Aldehyde wie Propanal, Pivalaldehyd (=Trimethylacetaldehyd), Isobutyraldehyd, Hexanal, 2-Ethylhexanal, 2-Methyl-butanal, 2-Ethyl-butanal, Octylaldehyd, Valeraldehyd, Iso-Valeraldehyd, 2-Methyl-valeraldehyd, 2,3-Dimethyl-valeraldehyd, 2-Methylundecanal, Cyclohexylcarboxaldehyd, Methoxyacetaldehyd, 2-Alkoxy-2-methylpropanale wie beispielsweise 2-Methoxy-2-methylpropanal, Ester aus organischen Carbonsäuren und 2-Hydroxy-2-methylpropanal, wie beispielsweise 2-Acetoxy-isobutyraldehyd, 3-Alkoxy-2,2-dimethylpropanale wie beispielsweise 3-n-Butoxy-2,2-dimethylpropanal, Ester aus 2,2-Dimethyl-3-hydroxy-propanal und kurzkettigen organischen Carbonsäuren, wie beispielsweise 2,2-Dimethyl-3-acetyloxy-propanal und 2,2-Dimethyl-3-isobutyroxy-propanal, Cyclopropancarboxaldehyd, 9-Ethyl-3-carbazolcarboxaldehyd, 10-Methylanthracen-9-carboxaldehyd, Pyrencarboxaldehyd, Benzaldehyd, o-, m- und p-Toluylaldehyd, 2- und 4-Methyl-benzaldehyd, 2- und 4-Ethylbenzaldehyd, 2- und 4-Propyl-benzaldehyd, 2- und 4-Butyl-benzaldehyd, 2,4-Dimethyl-benzaldehyd, 2,4,5-Trimethylbenzaldehyd, p-Anisaldehyd, 3-Methylp-anisaldehyd, m- und p-Ethoxy-benzaldehyd, m- und p-Phenoxybenzaldehyd, Nicotinaldehyd, Terephthaldehyd, Isophthaldehyd und Diphenylacetaldehyd, sowie Mischungen der vorgenannten Aldehyde.

Für die Verwendung mit den hochreaktiven aromatischen Isocyanaten wie beispielsweise TDI und MDI sind solche Aldehyde bevorzugt, welche keine tautomeren Enole bilden können. Mit Polyaldiminen ausgehend von solchen nicht tautomerisierenden Aldehyden können mit Prepolymeren ausgehend von aromatischen Polyisocyanaten Zusammensetzungen formuliert werden, die besonders lagerstabil sind. Aldehyde, welche keine tautomeren Enole bilden können, sind solche, welche in α -Stellung zur Carbonylgruppe keine C-H-Gruppierung enthalten. Dies trifft zu für aromatische Aldehyde sowie für aliphatische Aldehyde mit einem tertiären C-Atom in α-Stellung zur Carbonylgruppe.

Besonders bevorzugte Aldehyde sind Benzaldehyd, m-Phenoxybenzaldehyd, Isophthalaldehyd, Terephthalaldehyd; ausserdem Pivalaldehyd sowie Ester aus 2,2-Dimethyl-3-hydroxy-propanal und kurzkettigen organischen Carbonsäuren, wie beispielsweise 2,2-Dimethyl-3-acetyloxy-propanal und 2,2-Dimethyl-3-isobutyroxy-propanal.

Das Polyurethanprepolymer A und das Polyaldimin B werden miteinander vermischt, wobei das Polyaldimin B in einer Menge von 0.1 bis 1.1 Equivalenten Aldimin-Gruppierungen pro Equivalent Isocyanatgruppen des Prepolymers A dosiert wird. Zusätzlich kann ein Katalysator für die Hydrolyse des Polyaldimins zugegeben werden, beispielsweise eine organische Carbonsäure wie Benzoesäure oder Salicylsäure, ein organisches Carbonsäureanhydrid wie Phthalsäureanhydrid oder Hexahydrophthalsäureanhydrid, ein Silylester organischer Carbonsäuren, eine organische Sulfonsäure wie p-Toluolsulfonsäure, oder eine andere organische oder anorganische Säure, oder Mischungen der vorgenannten Säuren.

Durch Variation des Polyaldimins B in Kombination mit einem Polyurethanprepolymer A können Produkte mit stark unterschiedlichen mechanischen Eigenschaften formuliert werden. Polyaldimine, welche zu Produkten mit besonders weichelastischen Eigenschaften führen, sind beispielsweise solche auf der Basis von Jeffamine^{®}-Typen oder 1,5-Diamino-2-methylpentan. Polyaldimine, welche zu Produkten führen mit besonders hohen Festigkeiten, sind beispielsweise solche auf der Basis von 1,6-Hexamethylendiamin oder 1,3-Xylylendiamin, eventuell vermischt mit höherfunktionellen Aminen, wie beispielsweise 4-Aminomethyl-1,8-octandiamin oder Jeffamine^{®} T-403. Durch die richtige Auswahl des Polyaldimins B, eventuell als Mischung unterschiedlicher Polyaldimine, kombiniert mit den beschriebenen Polyurethanprepolymeren A, lassen sich die mechanischen Eigenschaften im ausgehärteten Zustand der hochmolekularen Zusammensetzungen nach Wunsch einstellen, beispielsweise auf Bruchdehnungen bis über 1000% und Zugfestigkeiten von ungefähr 1 MPa bis 20 MPa.

Durch die Möglichkeit der Variation des Polyaldimins B und die Verwendung der speziellen hochmolekularen Polyurethanprepolymere A kann die Anzahl der in einem Produktionsbetrieb benötigten Prepolymere für die Formulierung unterschiedlicher Polyurethan-Dichtstoffe, -Klebstoffe und -Beschichtungen, sowie -Beläge, insbesondere Bodenbeläge, welche in Bezug auf das mechanische Eigenschaftsprofil höchst unterschiedlichen Anforderungen genügen, stark reduziert werden. Da die Handhabung und die Lagerung verschiedener Prepolymere in Anbetracht ihrer Viskosität, ihrer Empfindlichkeit auf Feuchtigkeit und ihres Platzbedarfes für einen industriellen Produktionsbetrieb mit grossem Aufwand verbunden ist, ist die Reduzierung der Anzahl für die Herstellung unterschiedlicher Produkte benötigter Prepolymere vorteilhaft. Zudem ist es mit derartigen Zusammensetzungen möglich, sowohl weichelastische Baudichtstoffe mit einer sehr trockenen Oberfläche zu formulieren, als auch hochfeste elastische Klebstoffe mit Zugfestigkeiten von bis zu 20 MPa und mehr herzustellen, welche eine niedrige Verarbeitungsviskosität aufweisen und schnell und blasenfrei aushärten.

Als zusätzliche Komponenten in den beschriebenen Zusammensetzungen können unter anderem folgende, in der Polyurethanindustrie wohlbekannte Komponenten vorhanden sein:
Weichmacher, beispielsweise Ester organischer Carbonsäuren oder deren Anhydride, Phthalate, wie z.B. Dioctylphthalat oder Diisodecylphthalat, Adipate, wie zum Beispiel Dioctyladipat, organische Sulfonsäureester, Polybutene und andere, mit Isocyanaten nicht reagierende Verbindungen, Lösungsmittel, anorganische und organische Füllstoffe, wie zum Beispiel Calciumcarbonate, wahlweise gefällte, gegebenenfalls mit Stearaten beschichtete Calciumcarbonate, Russe, Kaoline, Aluminiumoxide, Kieselsäuren, PVC-Pulver, Fasern, beispielsweise aus Polyethylen, Pigmente, Katalysatoren für die Hydrolyse des Polyaldimins, organische Carbonsäuren, wie z.B. Benzoesäure und Salicylsäure, organische Carbonsäureanhydride, wie z.B. Phthalsäureanhydrid und Hexahydrophthalsäureanhydrid, Silylester organischer Carbonsäuren, organische Sulfonsäuren wie p-Toluolsulfonsäure, oder andere organische oder anorganische Säuren, weitere Katalysatoren, beispielsweise Organozinnverbindungen wie beispielsweise Dibutylzinndilaurat, Dibutylzinnacetylacetonat oder andere, in der Polyurethanchemie übliche Katalysatoren für die Reaktion der Isocyanatgruppen, Rheologie-Modifizierer, wie beispielsweise Verdickungsmittel, zum Beispiel Harnstoffverbindungen, Polyamidwachse, Bentonite oder pyrogene Kieselsäuren, Haftvermittler, beispielsweise Epoxysilane, Vinylsilane, Isocyanatosilane und mit Aldehyden zu Aldiminosilanen umgesetzte Aminosilane, Trocknungsmittel, beispielsweise p-Tosylisocyanat und andere reaktive Isocyanate, Orthoameisensäureester, Calciumoxid oder Molekularsiebe, Stabilisatoren gegen Wärme, Licht- und UV-Strahlung, Flammhemmer, oberflächenaktive Substanzen, fungistatisch wirkende Substanzen sowie weitere, in der Polyurethanindustrie üblicherweise eingesetzte Substanzen.

Die beschriebene Zusammensetzung wird hergestellt und aufbewahrt unter Ausschluss von Feuchtigkeit. Solche Zusammensetzungen sind lagerstabil, d.h. sie können in einer geeigneten Verpackung oder Anordnung, wie beispielsweise in einem Fass, einem Beutel oder einer Kartusche vor ihrer Anwendung während mehreren Monaten bis zu einem Jahr und länger aufbewahrt werden. Bei der Applikation kommt die Polyurethanurethanzusammensetzung in Kontakt mit Feuchtigkeit, worauf die Polyaldimine zu Aldehyden und Polyaminen hydrolysieren und die Polyamine mit dem isocyanatgruppenhaltigen Polyurethanprepolymer reagieren. Entweder kann das für die Reaktion benötigte Wasser aus der Luft stammen (Luftfeuchtigkeit), oder die Zusammensetzung kann mit einer Wasser enthaltenden Komponente in Kontakt gebracht werden, zum Beispiel durch Bestreichen, beispielsweise mit einem Abglättmittel, durch Besprühen oder mittels Eintauchverfahren, oder es kann der Zusammensetzung eine Wasser enthaltende Komponente zugesetzt werden, zum Beispiel in Form einer wasserhaltigen Paste, welche beispielsweise über einen Statikmischer zudosiert werden kann.

Wird das Polyaldimin im Unterschuss eingesetzt, d.h. das Verhältnis der Aldimingruppen zu den Isocyanatgruppen unterstöchiometrisch gewählt, so reagieren die überschüssigen Isocyanatgruppen mit dem vorhandenen Wasser. Als Folge der oben beschriebenen Reaktionen härtet die Zusammensetzung aus.

Die beschriebenen Zusammensetzungen sind geeignet als Dichtstoffe aller Art, beispielsweise zum Abdichten von Fugen im Bau, als Klebstoffe für das Verkleben von diversen Substraten, beispielsweise zum Verkleben von Bauteilen bei der Herstellung von Automobilen, Schienenfahrzeugen oder anderen industriellen Gütern, sowie als Beschichtungen oder Beläge für diverse Artikel beziehungsweise variable Untergründe. Die Zusammensetzung wird mit der Oberfläche eines beliebigen Untergrundes zumindest partiell kontaktiert. Bevorzugt ist eine gleichmässige Kontaktierung in Form eines Dicht- oder Klebstoffes, einer Beschichtung oder eines Belages erwünscht, und zwar in den Bereichen, welche für den Einsatz eine Verbindung in Form einer Verklebung oder Dichtung benötigen oder aber deren Untergrund abgedeckt sein soll. Es kann durchaus nötig sein, dass der Untergrund, bzw. der Artikel im Vorfeld des Kontaktierens einer physikalischen und/oder chemischen Vorbehandlung unterzogen werden muss, beispielsweise durch Schleifen, Sandstrahlen, Bürsten oder dergleichen, oder durch Behandeln mit Reinigern, Lösungsmitteln, Haftvermittlern, Haftvermittlerlösungen oder Primern, oder dem Aufbringen einer Haftbrücke oder eines Sealers.

### Beispiele

"GT" steht für Gewichtsteile. Alle Prozent-Angaben beziehen sich, wo nicht anders angegeben, auf Gewichts-Prozente. Mit der "Gesamtfunktionalität Prepolymer" ist die mittlere Isocyanat-Funktionalität des verwendeten Prepolymers gemeint. Mit der "Gesamtfunktionalität Polyaldimine" ist die mittlere Aldimin-Funktionalität der verwendeten Polyaldimine gemeint. Zusammensetzungen, welche kein Polyaldimin enthalten (Vergleichsbeispiele), wurden ausschliesslich mit Luftfeuchtigkeit ausgehärtet.

### Verwendete Polyole:

Arcol^{®} PPG 2000 N (Bayer): Lineares Polypropylenoxid-Polyol mit theoretischer OH-Funktionalität 2, mittlerem Molekulargewicht ca. 2000, OH-Zahl ca. 56 mg KOH/g, Ungesättigtheitsgrad ca. 0.01 mEq/g.

Acclaim^{®} 4200 N (Bayer): Lineares Polypropylenoxid-Polyol mit theoretischer OH-Funktionalität 2, mittlerem Molekulargewicht ca. 4000, OH-Zahl ca. 28 mg KOH/g, Ungesättigtheitsgrad ca. 0.005 mEq/g.

Acclaim^{®} 12200 (Bayer): Lineares Polypropylenoxid-Polyol mit theoretischer OH-Funktionalität 2, mittlerem Molekulargewicht ca. 12000, OH-Zahl ca. 11 mg KOH/g, Ungesättigtheitsgrad ca. 0.005 mEq/g.

Caradol^{®} ED 56-11 (Shell): Lineares Polypropylenoxid-Polyol mit theoretischer OH-Funktionalität 2, mittlerem Molekulargewicht ca. 2000, OH-Zahl ca. 56 mg KOH/g, Ungesättigtheitsgrad ca. 0.05 mEq/g.

Voranol^{®} EP 1900 (Dow): Lineares Polypropylenoxidpolyethylenoxid-Polyol, Ethylenoxid-terminiert, mit theoretischer OH-Funktionalität 2, mittlerem Molekulargewicht ca. 4000, OH-Zahl ca. 29 mg KOH/g, Ungesättigtheitsgrad ca. 0.08 mEq/g.

Caradol^{®} MD34-02 (Shell): Nichtlineares Polypropylenoxidpolyethylenoxid-Polyol, Ethylenoxid-terminiert, mit theoretischer OH-Funktionalität 3, mittlerem Molekulargewicht ca. 4900, OH-Zahl ca. 35 mg KOH/g, Ungesättigtheitsgrad ca. 0.08 mEq/g.

### Beschreibung der Prüfmethoden:

Die Viskosität wurde bei 23 °C auf einem Kegel-Platten-Viskosimeter der Fa. Haake (PK100 / VT-500) gemessen.

Die Hautbildungszeit (Zeit bis zur Klebefreiheit, "tack-free time") wurde bestimmt bei 23 °C und 50% relativer Luftfeuchtigkeit.

Zugfestigkeit, Bruchdehnung und E-Modul bei 0.5-5% Dehnung wurden bestimmt an während 7 Tagen bei 23 °C und 50% relativer Luftfeuchtigkeit ausgehärteten Filmen nach DIN EN 53504 (Zuggeschwindigkeit: 200 mm/min).

Die Blasenbildung wurde qualitativ beurteilt anhand der Menge der Blasen, die während der Aushärtung (bei 23 °C und 50% relativer Luftfeuchtigkeit) der für die mechanischen Prüfungen verwendeten Filme (Schichtdicke 2 mm) auftraten.

Die Auspresskraft wurde ermittelt an Aluminiumkartuschen mit einem Durchmesser von 45 mm, wobei der Dichtstoff an der Kartuschenspitze durch eine Oeffnung von 3 mm gepresst wurde. Das Auspressen erfolgte durch eine Zugprüfmaschine mit einer Geschwindigkeit von 60 mm/min.

Der Fadenabriss wurde ermittelt, indem man einen zylindrischen Eindringkörper von 2 cm Durchmesser 0.5 cm tief in den Dichtstoff (Schichtdicke 1 cm, Temperatur 20 °C) eindringen liess und ihn nach ca. 1 Sek. mit konstanter Geschwindigkeit (25 cm in 4 Sek.) wieder herauszog. Die Länge des dabei am Eindringkörper zurückbleibenden Dichtstoff-Fadens, definiert als Fadenabriss, wurde auf 1 mm genau mit dem Massstab gemessen. Der Vorgang wurde dreimal wiederholt und der Mittelwert der Messungen als Ergebnis bestimmt.

Die Oberfläche des ausgehärteten Dichtstoffs wurde durch leichte Berührung mit dem Finger auf Klebrigkeit beurteilt.

Die Durchhärtungsgeschwindigkeit wurde bestimmt bei 23 °C und 50% relativer Luftfeuchtigkeit auf PTFE-Untergrund.

Die Spannung bei 100% Dehnung wurde geprüft nach DIN EN 28340, Verfahren A.

### Herstellung Aldimine und Prepolymere

### Polyaldimin A1

In einem Rundkolben wurden 100 GT Jeffamine^{®} D-230 (Huntsman Chemicals) vorgelegt. Unter guter Kühlung und kräftigem Rühren wurden tropfenweise 91 GT Benzaldehyd zugegeben. Nach erfolgter Zugabe wurde noch 10 Minuten bei Raumtemperatur gerührt, dann das Wasser im Wasserstrahlvakuum vollständig abdestilliert. Das so erhaltene flüssige Reaktionsprodukt wies einen Aldimin-Gehalt, bestimmt als Amin-Gehalt, von 4.65 mmol NH₂/g auf und wurde ohne Reinigung weiterverwendet.

### Polyaldimin A2

In einem Rundkolben wurden 25 GT TCD-Diamin^{®} (Celanese Chemicals) vorgelegt. Unter guter Kühlung und kräftigem Rühren wurden tropfenweise 41 GT 2,2-Dimethyl-3-acetyloxy-propanal zugegeben. Nach erfolgter Zugabe wurde noch 10 Minuten bei Raumtemperatur gerührt, dann das Wasser im Wasserstrahlvakuum vollständig abdestilliert. Das so erhaltene flüssige Reaktionsprodukt wies einen Aldimin-Gehalt, bestimmt als Amin-Gehalt, von 4.22 mmol NH₂/g auf und wurde ohne Reinigung weiterverwendet.

### Polyaldimin A3

In einem Rundkolben wurden 15 GT 1,5-Diamino-2-methylpentan vorgelegt. Unter guter Kühlung und kräftigem Rühren wurden tropfenweise 40 GT 2,2-Dimethyl-3-acetyloxy-propanal zugegeben. Nach erfolgter Zugabe wurde noch 10 Minuten bei Raumtemperatur gerührt, dann das Wasser im Wasserstrahlvakuum vollständig abdestilliert. Das so erhaltene flüssige Reaktionsprodukt wies einen Aldimin-Gehalt, bestimmt als Amin-Gehalt, von 4.94 mmol NH₂/g auf und wurde ohne Reinigung weiterverwendet.

### Polyaldimin A4

In einem Rundkolben wurden 44 GT 1,3-Xylylendiamin vorgelegt. Unter guter Kühlung und kräftigem Rühren wurden tropfenweise 98 GT 2,2-Dimethyl-3-acetyloxy-propanal zugegeben. Nach erfolgter Zugabe wurde noch 10 Minuten bei Raumtemperatur gerührt, dann das Wasser im Wasserstrahlvakuum vollständig abdestilliert. Das so erhaltene flüssige Reaktionsprodukt wies einen Aldimin-Gehalt, bestimmt als Amin-Gehalt, von 4.97 mmol NH₂/g auf und wurde ohne Reinigung weiterverwendet.

### Polyaldimin A5

In einem Rundkolben wurden 100 GT 4-Aminomethyl-1,8-octandiamin vorgelegt. Unter guter Kühlung und kräftigem Rühren wurden tropfenweise 287 GT 2,2-Dimethyl-3-acetyloxy-propanal zugegeben. Nach erfolgter Zugabe wurde noch 10 Minuten bei Raumtemperatur gerührt, dann das Wasser im Wasserstrahlvakuum vollständig abdestilliert. Das so erhaltene flüssige Reaktionsprodukt wies einen Aldimin-Gehalt, bestimmt als Amin-Gehalt, von 4.92 mmol NH₂/g auf und wurde ohne Reinigung weiterverwendet.

### Polyaldimin A6

In einem Rundkolben wurden 67 GT Jeffamine^{®} D-230 (Huntsman Chemicals) vorgelegt. Unter guter Kühlung und kräftigem Rühren wurden tropfenweise 100 GT 2,2-Dimethyl-3-acetyloxy-propanal zugegeben. Nach erfolgter Zugabe wurde noch 10 Minuten bei Raumtemperatur gerührt, dann das Wasser im Wasserstrahlvakuum vollständig abdestilliert. Das so erhaltene flüssige Reaktionsprodukt wies einen Aldimin-Gehalt, bestimmt als Amin-Gehalt, von 3.56 mmol NH₂/g auf und wurde ohne Reinigung weiterverwendet.

### Polyaldimin A7

In einem Rundkolben wurden 100 GT Jeffamine^{®} T-403 (Huntsman Chemicals) vorgelegt. Unter guter Kühlung und kräftigem Rühren wurden tropfenweise 76 GT Benzaldehyd zugegeben. Nach erfolgter Zugabe wurde noch 10 Minuten bei Raumtemperatur gerührt, dann das Wasser im Wasserstrahlvakuum vollständig abdestilliert. Das so erhaltene flüssige Reaktionsprodukt wies einen Aldimin-Gehalt, bestimmt als Amin-Gehalt, von 3.90 mmol NH₂/g auf und wurde ohne Reinigung weiterverwendet.

### Prepolymer P1

530 GT Polyol Acclaim^{®} 4200 N und 72 GT 4,4'-Methylendiphenyldiisocyanat (MDI; Desmodur^{®} 44 MC L, Bayer) wurden nach bekanntem Verfahren bei 80 °C zu einem NCO-terminierten Prepolymeren umgesetzt. Das Reaktionsprodukt hatte einen titrimetrisch bestimmten Gehalt an freien Isocyanat-Gruppen von 2.00% und eine Viskosität bei 23 °C von 28 Pa·s.

### Prepolymer P2

661 GT Polyol Caradol^{®} ED56-11 und 139 GT 4,4'-Methylendiphenyldiisocyanat (MDI; Desmodur^{®} 44 MC L, Bayer) wurden nach bekanntem Verfahren bei 80 °C zu einem NCO-terminierten Prepolymeren umgesetzt. Das Reaktionsprodukt hatte einen titrimetrisch bestimmten Gehalt an freien Isocyanat-Gruppen von 2.06% und eine Viskosität bei 23 °C von 102 Pa·s.

### Prepolymer P3

1262 GT Polyol Arcol^{®} PPG 2000 N und 338 GT 4,4'-Methylendiphenyldiisocyanat (MDI; Desmodur^{®} 44 MC L, Bayer) wurden nach bekanntem Verfahren bei 80 °C zu einem NCO-terminierten Prepolymeren umgesetzt. Das Reaktionsprodukt hatte einen titrimetrisch bestimmten Gehalt an freien Isocyanat-Gruppen von 3.61% und eine Viskosität bei 23 °C von 37 Pa·s.

### Prepolymer P4

627 GT Polyol Caradol^{®} ED56-11 und 172 GT 4,4'-Methylendiphenyldiisocyanat (MDI; Desmodur^{®} 44 MC L, Bayer) wurden nach bekanntem Verfahren bei 80 °C zu einem NCO-terminierten Prepolymeren umgesetzt. Das Reaktionsprodukt hatte einen titrimetrisch bestimmten Gehalt an freien Isocyanat-Gruppen von 3.59% und eine Viskosität bei 23 °C von 38 Pa·s.

### Prepolymer P5

259 GT Polyol Acclaim^{®} 4200 N, 517 GT Polyol Caradol^{®} MD34-02 und 124 GT 4,4'-Methylendiphenyldiisocyanat (MDI; Desmodur^{®} 44 MC L, Bayer) wurden nach bekanntem Verfahren bei 80 °C zu einem NCO-terminierten Prepolymeren umgesetzt. Das Reaktionsprodukt hatte einen titrimetrisch bestimmten Gehalt an freien Isocyanat-Gruppen von 2.30% und eine Viskosität bei 23 °C von 92 Pa·s.

### Prepolymer P6

540 GT Polyol Acclaim^{®} 4200 N, 245 GT Polyol Caradol^{®} MD34-02 und 115 GT 4,4'-Methylendiphenyldiisocyanat (MDI; Desmodur^{®} 44 MC L, Bayer) wurden nach bekanntem Verfahren bei 80 °C zu einem NCO-terminierten Prepolymeren umgesetzt. Das Reaktionsprodukt hatte einen titrimetrisch bestimmten Gehalt an freien Isocyanat-Gruppen von 2.22% und eine Viskosität bei 23 °C von 47 Pa·s.

### Prepolymer P7

1462 GT Polyol Acclaim^{®} 4200 N und 138 GT Toluylendiisocyanat (TDI; Desmodur^{®} T-80 P L, Bayer; 80:20-Mischung des 2,4- und des 2,6-Isomeren) wurden nach bekanntem Verfahren bei 100 °C zu einem NCO-terminierten Prepolymeren umgesetzt. Das Reaktionsprodukt hatte einen titrimetrisch bestimmten Gehalt an freien Isocyanat-Gruppen von 2.12% und eine Viskosität bei 23 °C von 11 Pa·s.

### Prepolymer P8

1710 GT Polyol Acclaim^{®} 12200 und 91 GT 4,4'-Methylendiphenyldiisocyanat (MDI; Desmodur^{®} 44 MC L, Bayer) wurden nach bekanntem Verfahren bei 100 °C zu einem NCO-terminierten Prepolymeren umgesetzt. Das Reaktionsprodukt hatte einen titrimetrisch bestimmten Gehalt an freien Isocyanat-Gruppen von 0.88% und eine Viskosität bei 23 °C von 58 Pa·s.

### Prepolymer P9

221 GT Polyol Acclaim^{®} 4200 N, 13 GT Tripropylenglykol und 67 GT 4,4'-Methylendiphenyldiisocyanat (MDI; Desmodur^{®} 44 MC L, Bayer) wurden nach bekanntem Verfahren bei 80 °C zu einem NCO-terminierten Prepolymeren umgesetzt. Das Reaktionsprodukt hatte einen titrimetrisch bestimmten Gehalt an freien Isocyanat-Gruppen von 3.70% und eine Viskosität bei 23 °C von 38 Pa·s.

### Prepolymer P10

684 GT Polyol Acclaim^{®} 4200 N, 15 GT 1,2-Propandiol und 200 GT 4,4'-Methylendiphenyldiisocyanat (MDI; Desmodur^{®} 44 MC L, Bayer) wurden nach bekanntem Verfahren bei 80 °C zu einem NCO-terminierten Prepolymeren umgesetzt. Das Reaktionsprodukt hatte einen titrimetrisch bestimmten Gehalt an freien Isocyanat-Gruppen von 3.76% und eine Viskosität bei 23 °C von 46 Pa·s.

### Prepolymer P11

606 GT Polyol Acclaim^{®} 4200 N, 56 GT Tripropylenglykol und 238 GT 4,4'-Methylendiphenyldiisocyanat (MDI; Desmodur^{®} 44 MC L, Bayer) wurden nach bekanntem Verfahren bei 80 °C zu einem NCO-terminierten Prepolymeren umgesetzt. Das Reaktionsprodukt hatte einen titrimetrisch bestimmten Gehalt an freien Isocyanat-Gruppen von 4.53% und eine Viskosität bei 23 °C von 58 Pa·s.

### Prepolymer P12

565 GT Polyol Acclaim^{®} 4200 N, 35 GT Neopentylglykol und 255 GT 4,4'-Methylendiphenyldiisocyanat (MDI; Desmodur^{®} 44 MC L, Bayer) wurden nach bekanntem Verfahren bei 80 °C zu einem NCO-terminierten Prepolymeren umgesetzt. Das Reaktionsprodukt hatte einen titrimetrisch bestimmten Gehalt an freien Isocyanat-Gruppen von 5.01% und eine Viskosität bei 23 °C von 48 Pa·s.

### Prepolymer P13

518 GT Polyol Acclaim^{®} 4200 N und 41 GT Toluylendiisocyanat (TDI; Desmodur^{®} T-80 P L, Bayer; 80:20-Mischung des 2,4- und des 2,6-Isomeren) wurden nach bekanntem Verfahren bei 100 °C zu einem NCO-terminierten Prepolymeren umgesetzt. Das Reaktionsprodukt hatte einen titrimetrisch bestimmten Gehalt an freien Isocyanat-Gruppen von 1.50% und eine Viskosität bei 23 °C von 18 Pa·s.

### Prepolymer P14

660 GT Polyol Acclaim^{®} 4200 N, 330 GT Polyol Caradol^{®} MD34-02 und 84 GT Toluylendiisocyanat (TDI; Desmodur^{®} T-80 P L, Bayer; 80:20-Mischung des 2,4- und des 2,6-Isomeren) wurden nach bekanntem Verfahren bei 80 °C zu einem NCO-terminierten Prepolymeren umgesetzt. Das Reaktionsprodukt hatte einen titrimetrisch bestimmten Gehalt an freien Isocyanat-Gruppen von 1.50% und eine Viskosität bei 23 °C von 27 Pa·s.

### Prepolymer P15

673 GT Polyol Voranol^{®} EP 1900 und 55 GT Toluylendiisocyanat (TDI; Desmodur^{®} T-80 P L, Bayer; 80:20-Mischung des 2,4- und des 2,6-Isomeren) wurden nach bekanntem Verfahren bei 80 °C zu einem NCO-terminierten Prepolymeren umgesetzt. Das Reaktionsprodukt hatte einen titrimetrisch bestimmten Gehalt an freien Isocyanat-Gruppen von 1.51% und eine Viskosität bei 23 °C von 21 Pa·s.

### Beispiele 1-4 (erfindungsgemäss) und Beispiele 5-6 (Vergleich)

Die in Tabelle 1 angegebenen Prepolymere und Aldimine wurden im NH₂/NCO-Verhältnis (d.h. Equivalente Aldimin-Gruppierungen pro Equivalente Isocyanatgruppen des Prepolymers) von 0.9/1.0 homogen vermischt. Die Mischung wurde mit Benzoesäure (350 mg/100 g Prepolymer) versetzt, erneut homogen gemischt und sofort in luftdichte Tuben abgefüllt und diese während 15 Stunden bei 60 °C gelagert. Dann wurde ein Teil der Mischung in ein mit PTFE beschichtetes Blech gegossen (Filmdicke ca. 2 mm), während 7 Tagen bei 23 °C und 50% relativer Luftfeuchtigkeit ausgehärtet und anschliessend die mechanischen Eigenschaften des durchgehärteten Films gemessen. Mit dem verbleibenden Tubeninhalt wurde die Lagerstabilität bestimmt durch Messung der Viskosität vor und nach Lagerung während 7 Tagen bei 60 °C. Die Ergebnisse der Prüfungen sind in Tabelle 1 aufgeführt.

Die Ergebnisse zeigen, dass die erfindungsgemässen Zusammensetzungen der Beispiele 1-4 (Prepolymer auf Basis eines linearen Polyols mit niedrigem Ungesättigtheitsgrad, mit Polyaldimin ausgehärtet) je nach dem verwendeten Polyaldimin breit variierende mechanische Festigkeiten und Elastizitätsmodule aufweisen, sowie eine sehr niedrige Viskosität, eine gute Lagerstabilität und eine hohe Reaktivität besitzen und blasenfrei aushärten. Das nach dem Stand der Technik formulierte Vergleichsbeispiel 5 (Prepolymer auf Basis eines mit Diisocyanat vorverlängerten konventionellen linearen Polyols, mit Polyaldimin ausgehärtet) weist demgegenüber eine stark erhöhte Viskosität und, bei Verwendung des gleichen Polyaldimins (Bsp. 5 gegenüber Bsp. 4), eine deutlich niedrigere Zugfestigkeit auf. Das nach dem Stand der Technik formulierte Vergleichsbeispiel 6 (Prepolymer auf Basis eines linearen Polyols mit niedrigem Ungesättigtheitsgrad, mit Luftfeuchtigkeit ausgehärtet) zeigt eine ungenügende Reaktivität (langsame Hautbildungszeit) und eine deutliche Tendenz zur Blasenbildung.

**Tabelle 1**

| **Beispiel** | **1** | **2** | **3** | **4** | **5 Vergleich** | **6 Vergleich** |
|---|---|---|---|---|---|---|
| Prepolymer | P1 | P1 | P1 | P1 | P2 | P1 |
| Polyaldimin | A1 | A2 | A3 | A4 | A4 | - |
| NCO-Gehalt (Gew.-%) | 2.00 | 2.00 | 2.00 | 2.00 | 2.06 | 2.00 |
| Viskosität vor Lagerung (Pa·s) | 28 | 27 | 26 | 27 | 91 | 28 |
| Viskosität nach Lagerung (Pa·s) | 32 | 33 | 29 | 32 | 96 | 31 |
| Hautbildungszeit (Min.) | 52 | 33 | 43 | 35 | 30 | 600 |
| Blasenbildung | keine | keine | keine | keine | keine | viele |
| Zugfestigkeit (MPa) | 4.2 | 8.3 | 8.8 | 12.1 | 4.9 | n.m. |
| Bruchdehnung (%) | 1000 | 1300 | 1300 | 1300 | 1400 | n.m. |
| E-Modul 0.5-5% (MPa) | 1.6 | 1.9 | 2.0 | 13.1 | 15.6 | n.m. |

| | | | | | | |
|---|---|---|---|---|---|---|
| (n.m. = nicht messbar) | | | | | | |

### Beispiel 7 (erfindungsgemäss) und Beispiel 8 (Vergleich)

In gleicher Weise wie in Beispiel 1 beschrieben wurden Zusammensetzungen aus verschiedenen Prepolymeren und Aldiminen hergestellt und geprüft. Die dabei eingesetzten Prepolymere und Aldimine sowie die Ergebnisse der Prüfungen sind in der Tabelle 2 aufgeführt.

Die Ergebnisse zeigen, dass die erfindungsgemässe Zusammensetzung des Beispiels 7 (lineares Polyol mit niedrigem Ungesättigtheitsgrad) eine gegenüber dem nach dem Stand der Technik formulierten Vergleichsbeispiel 8 (konventionelles lineares Polyol) deutlich höhere Zugfestigkeit aufweist, und zwar bei sonst vergleichbaren Eigenschaften.

**Tabelle 2**

| **Beispiel** | **7** | **8 (Vergleich)** |
|---|---|---|
| Prepolymer | P3 | P4 |
| Polyaldimin | A4 | A4 |
| NCO-Gehalt (Gew.-%) | 3.61 | 3.59 |
| Viskosität vor Lagerung (Pa·s) | 37 | 34 |
| Viskosität nach Lagerung (Pa·s) | 38 | 35 |
| Hautbildungszeit (Min.) | 32 | 30 |
| Blasenbildung | keine | keine |
| Zugfestigkeit (MPa) | 11.3 | 7.2 |
| Bruchdehnung (%) | 710 | 700 |
| E-Modul 0.5-5% (MPa) | 26.6 | 28.8 |

### Beispiele 9, 12-14 (erfindungsgemäss) und Beispiele 10,11,15,16 (Vergleich)

In gleicher Weise wie in Beispiel 1 beschrieben wurden Zusammensetzungen aus verschiedenen Prepolymeren und Aldiminen hergestellt und geprüft. Die dabei eingesetzten Prepolymere und Aldimine sowie die Ergebnisse der Prüfungen sind in der Tabelle 3 aufgeführt.

Die Ergebnisse zeigen, dass die erfindungsgemässen Zusammensetzungen der Beispiele 9 und 12-14 (Prepolymer auf Basis eines linearen Polyols mit niedrigem Ungesättigtheitsgrad, mit Polyaldimin-Mischung der Gesamtfunktionalität >2 ausgehärtet) eine gegenüber den nach dem Stand der Technik formulierten Vergleichsbeispielen 10 und 15 (Prepolymer mit Gesamtfunktionalität >2 auf Basis einer Mischung von linearem und nichtlinearem Polyol, mit Polyaldimin der Gesamtfunktionalität 2 ausgehärtet) niedrigere Viskositäten aufweisen (Bsp. 10 im Vergleich zu Bsp. 9 und Bsp. 15 im Vergleich zu Bsp. 14). Die nach dem Stand der Technik formulierten Vergleichsbeispiele 11 und 16 (Prepolymer mit Gesamtfunktionalität >2 auf Basis einer Mischung von linearem und nichtlinearem Polyol, mit Luftfeuchtigkeit ausgehärtet) weisen im Vergleich zu den anderen Beispielen eine ungenügende Reaktivität (langsame Hautbildungszeit), sowie eine Tendenz zu Blasenbildung auf.

**Tabelle 3**

| **Beispiel** | **9** | **10 Vergleich** | **11 Vergleich** | **12** | **13** | **14** | **15 Vergleich** | **16 Vergleich** |
|---|---|---|---|---|---|---|---|---|
| Prepolymer | P1 | P5 | P5 | P1 | P1 | P1 | P6 | P6 |
| Polyaldimin(e),Verhältnis (GT/GT) | A2/A5,2/1 | A2 | - | A2/A5,7/1 | A6/A5,7/1 | A4/A5,7/1 | A2 | - |
| Gesamtfunktionalität Prepolymer | 2.0 | 2.3 | 2.3 | 2.0 | 2.0 | 2.0 | 2.1 | 2.1 |
| Gesamtfunktionalität Polyaldimine | 2.3 | 2.0 | (2.0) | 2.1 | 2.1 | 2.1 | 2.0 | (2.0) |
| NCO-Gehalt (Gew.-%) | 2.00 | 2.30 | 2.30 | 2.00 | 2.00 | 2.00 | 2.22 | 2.22 |
| Viskosität vor Lagerung (Pa·s) | 30 | 87 | 92 | 28 | 25 | 28 | 48 | 49 |
| Viskosität nach Lagerung (Pa·s) | 38 | 108 | 105 | 35 | 29 | 32 | 63 | 58 |
| Hautbildungszeit (Min.) | 24 | 12 | 240 | 23 | 20 | 23 | 15 | 320 |
| Blasenbildung | keine | keine | einige | keine | keine | keine | keine | viele |
| Zugfestigkeit (MPa) | 2.3 | 2.6 | 2.3 | 4.1 | 2.8 | 5.0 | 3.7 | n.m. |
| Bruchdehnung (%) | 270 | 230 | 190 | 620 | 640 | 450 | 400 | n.m. |
| E-Modul 0.5-5% (MPa) | 2.4 | 3.0 | 5.2 | 2.0 | 1.4 | 9.4 | 3.0 | n.m. |

| | | | | | | | | |
|---|---|---|---|---|---|---|---|---|
| (n.m. = nicht messbar) | | | | | | | | |

### Beispiel 17 (erfindungsgemäss) und Beispiel 18 (Vergleich)

In gleicher Weise wie in Beispiel 1 beschrieben wurden Zusammensetzungen aus verschiedenen Prepolymeren und Aldiminen hergestellt und geprüft. Die dabei eingesetzten Prepolymere und Aldimine sowie die Ergebnisse der Prüfungen sind in der Tabelle 4 aufgeführt.

Die Ergebnisse zeigen, dass die erfindungsgemässe Zusammensetzung des Beispiels 17 (Prepolymer auf Basis eines linearen Polyols mit niedrigem Ungesättigtheitsgrad, mit Polyaldimin ausgehärtet) eine sehr niedrige Viskosität, gute mechanische Eigenschaften und eine hohe Reaktivität (schnelle Hautbildungszeit) aufweist und blasenfrei aushärtet. Demgegenüber weist das nach dem Stand der Technik formulierte Vergleichsbeispiel 18 (Prepolymer auf Basis eines linearen Polyols mit niedrigem Ungesättigtheitsgrad, mit Luftfeuchtigkeit ausgehärtet) eine ungenügende Reaktivität und eine Tendenz zu Blasenbildung auf.

**Tabelle 4**

| **Beispiel** | **17** | **18 Vergleich** |
|---|---|---|
| Prepolymer | P7 | P7 |
| Polyaldimin | A4 | - |
| NCO-Gehalt (Gew.-%) | 2.12 | 2.12 |
| Viskosität vor Lagerung (Pa·s) | 11 | 11 |
| Viskosität nach Lagerung (Pa·s) | 12 | 12 |
| Hautbildungszeit (Min.) | 37 | >600 |
| Blasenbildung | keine | einige |
| Zugfestigkeit (MPa) | 10.2 | bleibt klebrig, weich; n.m. |
| Bruchdehnung (%) | 1300 | |
| E-Modul 0.5-5% (MPa) | 10.3 | |

| | | |
|---|---|---|
| (n.m. = nicht messbar) | | |

### Beispiele 19-20 (erfindungsgemäss) und Beispiel 21 (Vergleich)

In gleicher Weise wie in Beispiel 1 beschrieben wurden Zusammensetzungen aus verschiedenen Prepolymeren und Aldiminen hergestellt und geprüft. Die dabei eingesetzten Prepolymere und Aldimine sowie die Ergebnisse der Prüfungen sind in der Tabelle 5 aufgeführt.

Die Ergebnisse zeigen, dass die erfindungsgemässen Zusammensetzungen der Beispiele 19 bzw. 20 (Prepolymer auf Basis eines langkettigen linearen Polyols mit niedrigem Ungesättigtheitsgrad, mit Polyaldimin-Mischung der Gesamtfunktionalität 2 bzw. >2 ausgehärtet) gute mechanische Eigenschaften, eine hohe Reaktivität (kurze Hautbildungszeit) sowie eine blasenfreie Aushärtung aufweisen. Das Beispiel 20 mit einer Polyaldimin-Mischung der Gesamtfunktionalität >2 zeigt gegenüber dem Beispiel 19 eine höhere Zugfestigkeit. Das nach dem Stand der Technik formulierte Vergleichsbeispiel 21 (Prepolymer auf Basis eines langkettigen linearen Polyols mit niedrigem Ungesättigtheitsgrad, mit Luftfeuchtigkeit ausgehärtet) zeigt gegenüber den erfindungsgemässen Beispielen 19 und 20 eine ungenügende Reaktivität und eine Tendenz zu Blasenbildung. Die Lagerstabilität der drei Beispiele ist jeweils gut (geringer Anstieg der Viskosität während der Lagerung).

**Tabelle 5**

| **Beispiel** | **19** | **20** | **21 Vergleich** |
|---|---|---|---|
| Prepolymer | P8 | P8 | P8 |
| Polyaldimin(e),Verhältnis (GT/GT) | A4 | A4/A5,7/1 | - |
| NCO-Gehalt (Gew.-%) | 0.88 | 0.88 | 0.88 |
| Viskosität vor Lagerung (Pa·s) | 58 | 66 | 60 |
| Viskosität nach Lagerung (Pa·s) | 72 | 82 | 70 |
| Hautbildungszeit (Min.) | 52 | 48 | >600 |
| Blasenbildung | keine | keine | einige |
| Zugfestigkeit (MPa) | 4.2 | 4.7 | bleibt weich, pastös; n.m. |
| Bruchdehnung (%) | >1300 | 1040 | |
| E-Modul 0.5-5% (MPa) | 2.9 | 2.4 | |

| | | | |
|---|---|---|---|
| (n.m. = nicht messbar) | | | |

**Tabelle 6**

| **Beispiel** | **22** | **23** | **24** | **25 Vergleich** | **26** | **27 Vergleich** | **28** | **29 Vergleich** | **30** | **31 Vergleich** |
|---|---|---|---|---|---|---|---|---|---|---|
| Prepolymer | P9 | P9 | P9 | P9 | P10 | P10 | P11 | P11 | P12 | P12 |
| Polyaldimin(e),Verhältnis (GT/GT) | A2 | A3 | A4 | - | A2/A5,7/1 | - | A2/A5,7/1 | - | A2/A5,3/1 | - |
| NCO-Gehalt (Gew.-%) | 3.70 | 3.70 | 3.70 | 3.70 | 3.76 | 3.76 | 4.53 | 4.53 | 5.01 | 5.01 |
| Viskosität vor Lagerung (Pa·s) | 36 | 35 | 36 | 38 | 43 | 46 | 56 | 58 | 46 | 48 |
| Viskosität nach Lagerung (Pa·s) | 43 | 37 | 40 | 43 | 50 | 51 | 65 | 64 | 55 | 52 |
| Hautbildungszeit (Min.) | 41 | 51 | 42 | 360 | 45 | 420 | 42 | 360 | 41 | 480 |
| Blasenbildung | keine | keine | keine | sehr viele | keine | sehr viele | keine | sehr viele | keine | sehr viele |
| Zugfestigkeit (MPa) | 15.0 | 14.5 | 17.0 | n.m. | 14.1 | n.m. | 15.6 | n.m. | 18.4 | n.m. |
| Bruchdehnung (%) | 790 | 770 | 810 | n.m. | 500 | n.m. | 600 | n.m. | 330 | n.m. |
| E-Modul 0.5-5% (MPa) | 5.8 | 4.1 | 33.1 | n.m. | 5.3 | n.m. | 10.5 | n.m. | 40.0 | n.m. |

| | | | | | | | | | | |
|---|---|---|---|---|---|---|---|---|---|---|
| (n.m. = nicht messbar) | | | | | | | | | | |

### Beispiele 22-24, 26, 28, 30 (erfindungsgemäss) und Beispiele 25, 27, 29, 31 (Vergleich)

In gleicher Weise wie in Beispiel 1 beschrieben wurden Zusammensetzungen aus verschiedenen Prepolymeren und Aldiminen hergestellt und geprüft. Die dabei eingesetzten Prepolymere mit unterschiedlichem Isocyanat-Gehalt und die Aldimine sowie die Ergebnisse der Prüfungen sind in der Tabelle 6 aufgeführt.

Die Ergebnisse zeigen, dass die erfindungsgemässen Zusammensetzungen der Beispiele 22-24 bzw. 26, 28 und 30 (Prepolymere auf Basis eines linearen Polyols mit niedrigem Ungesättigtheitsgrad und eines niedrigmolekularen Diols, mit einem Polyaldimin bzw. einer Polyaldimin-Mischung der Gesamtfunktionalität 2 bzw. >2 ausgehärtet) sehr gute mechanische Eigenschaften aufweisen, welche sich durch Variation des Polyaldimins verändern lassen. Die entsprechenden Prepolymere wurden in den nach dem Stand der Technik formulierten Vergleichsbeispielen 25, 27, 29 und 31 mit Luftfeuchtigkeit ausgehärtet. Die Vergleichsbeispiele weisen eine sehr viel niedrigere Reaktivität (lange Hautbildungszeit) und eine starke Tendenz zu Blasenbildung auf. Die mechanischen Werte dieser Beispiele lassen sich aufgrund der vielen Blasen nicht sinnvoll messen.

### Beispiel 32 (Dichtstoff) (erfindungsgemäss)

In einem Vakuummischer wurden 30 GT Prepolymer P13, 25 GT Kreide-Pulver Omyacarb^{®} 5 GU (Omya), 20 GT Weichmacher Palatinol^{®} Z (Diisodecylphthalat, BASF), 10 GT PVC-Pulver Solvic^{®} 373 MC (Solvay), 10 GT Verdickungsmittel Crayvallac^{®} super (Cray Valley), 3 GT Xylol, 0.2 GT Stabilisator Irganox^{®} 1010 (Ciba), 0.2 GT Silan Silquest^{®} A-187 (OSi Crompton), 0.1 GT Benzoesäure, 1.1 GT Polyaldimin A1 und 1.6 GT Polyaldimin A7 zu einer knollenfreien, homogenen Paste verarbeitet und diese in luftdichte Kartuschen abgefüllt.

Die Ergebnisse der daran vorgenommenen Prüfungen sind in der Tabelle 7 aufgeführt.

### Beispiel 33 (Dichtstoff) (Vergleich)

In einem Vakuummischer wurden 30 GT Prepolymer P14, 25 GT Kreide-Pulver Omyacarb^{®} 5 GU (Omya), 20 GT Weichmacher Palatinol^{®} Z (Diisodecylphthalat, BASF), 10 GT PVC-Pulver Solvic^{®} 373 MC (Solvay), 10 GT Verdickungsmittel Crayvallac^{®} super (Cray Valley), 3 GT Xylol, 0.2 GT Stabilisator Irganox^{®} 1010 (Ciba), 0.2 GT Silan Silquest^{®} A-187 (OSi Crompton), 0.1 GT Benzoesäure und 2.2 GT Polyaldimin A1 zu einer knollenfreien, homogenen Paste verarbeitet und diese in luftdichte Kartuschen abgefüllt.

Die Ergebnisse der daran vorgenommenen Prüfungen sind in der Tabelle 7 aufgeführt.

Der erfindungsgemässe Dichtstoff des Beispiels 32 (Prepolymer auf Basis eines linearen Polyols mit niedrigem Ungesättigtheitsgrad, partiell mit Polyaldimin-Mischung der Gesamtfunktionalität >2 ausgehärtet) weist im Vergleich mit dem nach dem Stand der Technik formulierten Dichtstoff des Vergleichsbeispiels 33 (Prepolymer mit Gesamtfunktionalität >2 auf Basis einer Mischung von linearem und nichtlinearem Polyol, partiell mit Polyaldimin der Gesamtfunktionalität 2 ausgehärtet) eine niedrigere Auspresskraft und einen kürzeren Fadenabriss auf, bedingt durch die niedrigere Viskosität des Prepolymers, bei trockener Oberflächenbeschaffenheit und sonst ähnlichen Werten für die mechanischen Eigenschaften, die Reaktivität und die Lagerstabilität.

### Beispiel 34 (Dichtstoff) (Vergleich)

In einem Vakuummischer wurden 30 GT Prepolymer P15, 25 GT Kreide-Pulver Omyacarb^{®} 5 GU (Omya), 20 GT Weichmacher Palatinol^{®} Z (Diisodecylphthalat, BASF), 10 GT PVC-Pulver Solvic^{®} 373 MC (Solvay), 10 GT Verdickungsmittel Crayvallac^{®} super (Cray Valley), 3 GT Xylol, 0.2 GT Stabilisator Irganox^{®} 1010 (Ciba), 0.2 GT Silan Silquest^{®} A-187 (OSi Crompton), 0.1 GT Benzoesäure, 1.1 GT Polyaldimin A1 und 1.6 GT Polyaldimin A7 zu einer knollenfreien, homogenen Paste verarbeitet und diese in luftdichte Kartuschen abgefüllt.

Die Ergebnisse der daran vorgenommenen Prüfungen sind in der Tabelle 7 aufgeführt.

Der erfindungsgemässe Dichtstoff des Beispiels 32 (Prepolymer auf Basis eines linearen Polyols mit niedrigem Ungesättigtheitsgrad, partiell mit Polyaldimin-Mischung der Gesamtfunktionalität >2 ausgehärtet) weist im Vergleich mit dem nach dem Stand der Technik formulierten Dichtstoff des Vergleichsbeispiels 34 (Prepolymer auf Basis eines konventionellen linearen Polyols, partiell mit Polyaldimin-Mischung der Gesamtfunktionalität >2 ausgehärtet) deutlich bessere mechanische Eigenschaften und eine trockene Oberflächenbeschaffenheit auf.

**Tabelle 7**

| **Beispiel** | **32** | **33 Vergleich** | **34 Vergleich** |
|---|---|---|---|
| Oberflächenbeschaffenheit nach Aushärtung | trocken | trocken | klebrig |
| Hautbildungszeit (Min.) | 250 | 90 | 135 |
| Durchhärtungsgeschwindigkeit (mm/Tag) | 1.8 | 2.4 | 2.5 |
| Shore A-Härte | 47 | 44 | 18 |
| Fadenabriss (mm) | 28 | 40 | 15 |
| Auspresskraft (N) | 443 | 558 | 271 |
| Lagerstabilität | i.O. | i.O. | i.O. |
| Zugfestigkeit (MPa) | 2.2 | 3.0 | 0.3 |
| Bruchdehnung (%) | 880 | 1080 | 250 |
| Spannung bei 100% Dehnung (MPa) | 0.98 | 0.81 | 0.18 |

## Patentansprüche

1. Zusammensetzung umfassend
- mindestens ein Polyurethanprepolymer A mit Isocyanatendgruppen, hergestellt aus mindestens einem Polyisocyanat mit mindestens einem Polyol A1 und gegebenenfalls mindestens einem Polyol A2, wie nachstehend spezifiziert:
A1: Lineares Polyoxyalkylenpolyol mit einem Ungesättigtheitsgrad <0.02 mEq/g;
A2: Polyol in einer Menge von 0 - 30 Gewichts-%, vorzugsweise 0 - 20 Gewichts-%, insbesondere 0 - 10 Gewichts-%, bezogen auf die Totalmenge von A1+A2;
und
- mindestens ein Polyaldimin B.

2. Zusammensetzung nach Anspruch 1, **dadurch gekennzeichnet, dass** das Polyol A1 ein Molekulargewicht von 2'000 - 30'000 g/mol, insbesondere 2'000 - 20'000 g/mol aufweist.

3. Zusammensetzung nach einem der vorhergehenden Ansprüche, **dadurch gekennzeichnet, dass** der Ungesättigkeitsgrad des Polyols A1 <0.017 mEq/g beträgt.

4. Zusammensetzung nach einem der vorhergehenden Ansprüche, **dadurch gekennzeichnet, dass** das Polyol A1 ein mittels DMC-Katalyse hergestelltes Polyol ist.

5. Zusammensetzung nach einem der vorhergehenden Ansprüche, **dadurch gekennzeichnet, dass** das Polyol A1 ein Polyoxypropylendiol oder ein EO-endcapped Polyoxypropylendiol ist.

6. Zusammensetzung nach einem der vorhergehenden Ansprüche, **dadurch gekennzeichnet, dass** das Polyol A2 ein Polyoxyalkylenpolyol mit einem Ungesättigkeitsgrad >0.04 mEq/mol ist.

7. Zusammensetzung nach einem der vorhergehenden Ansprüche, **dadurch gekennzeichnet, dass** das Polyol A2 ein Polyoxyalkylenpolyol mit einem Molekulargewicht von 400 - 2000 g/mol ist.

8. Zusammensetzung nach einem der vorhergehenden Ansprüche, **dadurch gekennzeichnet, dass** das Polyol A2 ein Polyoxyalkylenpolyol mit einer OH-Funktionalität von grösser als 2 und bis etwa 3 ist.

9. Zusammensetzung nach einem der vorhergehenden Ansprüche, **dadurch gekennzeichnet, dass** das Polyol A2 ausgewählt ist aus der Gruppe, die folgendes umfasst: 1,2-Ethandiol, 1,2- und 1,3-Propandiol, Neopentylglykol, Diethylenglykol, Triethylenglykol, die isomeren Dipropylenglykole und Tripropylenglykole, die isomeren Butandiole, Pentandiole, Hexandiole, Heptandiole, Octandiole, Nonandiole, Decandiole, Undecandiole, 1,3- und 1,4-Cyclohexandimethanol, hydriertes Bisphenol A, 1,1,1-Trimethylolethan, 1,1,1-Trimethylolpropan und Glycerin.

10. Zusammensetzung nach einem der vorhergehenden Ansprüche, **dadurch gekennzeichnet, dass** das Polyisocyanat ein Diisocyanat ist.

11. Zusammensetzung nach einem der vorhergehenden Ansprüche, **dadurch gekennzeichnet, dass** der dem Polyaldimin B zugrunde liegende Aldehyd in α-Stellung zur Carbonylgruppe keine C-H-Gruppierung aufweist.

12. Zusammensetzung nach einem der vorhergehenden Ansprüche, **dadurch gekennzeichnet, dass** das Polyurethanprepolymer A und das Polyaldimin B im Verhältnis von 0.1 - 1.1 Equivalent Aldimin-Gruppierungen pro Equivalent Isocyanatgruppen vorhanden ist.

13. Verfahren zur Herstellung der Zusammensetzung gemäss einem der Ansprüche 1 - 12, umfassend einen Schritt der Herstellung eines Polyaldimins durch Umsetzung eines Aldehyds mit einem Amin in an sich bekannter Weise.

14. Verwendung der Zusammensetzung gemäss einem der Ansprüche 1 - 12 als Klebstoff, Dichtstoff, Beschichtung oder Belag.

15. Anordnung, **dadurch gekennzeichnet, dass** sie eine Zusammensetzung nach einem der Ansprüche 1 - 12 enthält.

16. Artikel, dessen Oberfläche zumindest partiell mit einer Zusammensetzung gemäss einem der Ansprüche 1 - 12 kontaktiert worden ist.

17. Verfahren zum Verkleben, **dadurch gekennzeichnet, dass** es einen Schritt des Kontaktierens mit einer Zusammensetzung gemäss einem der Ansprüche 1 - 12 umfasst.

18. Verfahren zum Abdichten, **dadurch gekennzeichnet, dass** es einen Schritt des Kontaktierens mit einer Zusammensetzung gemäss einem der Ansprüche 1 - 12 umfasst.

19. Verfahren zum Beschichten, **dadurch gekennzeichnet, dass** es einen Schritt des Kontaktierens mit einer Zusammensetzung gemäss einem der Ansprüche 1 - 12 umfasst.

20. Verfahren gemäss einem der Ansprüche 17 - 19, **dadurch gekennzeichnet, dass** es einen zusätzlichen Schritt des Aushärtens an der Luft umfasst.

21. Verfahren gemäss einem der Ansprüche 17 - 20, **dadurch gekennzeichnet, dass** es zusätzlich einen Schritt des Kontaktierens mit einer wasserhaltigen Komponente oder eine Beimischung derselben umfasst.

## Claims

1. Composition comprising
- at least one polyurethane prepolymer A having isocyanate end groups, prepared from at least one polyisocyanate with at least one polyol A1 and if desired at least one polyol A2, as specified below:
A1: linear polyoxyalkylene polyol having a degree of unsaturation < 0.02 meq/g;
A2: polyol in an amount of 0-30% by weight, preferably 0-20% by weight, in particular 0-10% by weight, based on the total amount of A1+A2; and
- at least one polyaldimine B.

2. Composition according to Claim 1, **characterized in that** the polyol A1 has a molecular weight of 2000-30 000 g/mol, in particular 2000-20 000 g/mol.

3. Composition according to one of the preceding claims, **characterized in that** the degree of unsaturation of the polyol A1 is < 0.017 meq/g.

4. Composition according to one of the preceding claims, **characterized in that** the polyol A1 is a polyol prepared by means of DMC catalysis.

5. Composition according to one of the preceding claims, **characterized in that** the polyol A1 is a polyoxypropylene diol or an EO-endcapped polyoxypropylene diol.

6. Composition according to one of the preceding claims, **characterized in that** the polyol A2 is a polyoxyalkylene polyol having a degree of unsaturation > 0.04 meq/mol.

7. Composition according to one of the preceding claims, **characterized in that** the polyol A2 is a polyoxyalkylene polyol having a molecular weight of 400-2000 g/mol.

8. Composition according to one of the preceding claims, **characterized in that** the polyol A2 is a polyoxyalkylene polyol having an OH functionality of greater than 2 and up to about 3.

9. Composition according to one of the preceding claims, **characterized in that** the polyol A2 is selected from the group consisting of the following: 1,2-ethanediol, 1,2- and 1,3-propanediol, neopentyl glycol, diethylene glycol, triethylene glycol, the isomeric dipropylene glycols and tripropylene glycols, the isomeric butanediols, pentanediols, hexanediols, heptanediols, octanediols, nonanediols, decanediols, undecanediols, 1,3- and 1,4-cyclohexanedimethanol, hydrogenated bisphenol A, 1,1,1-trimethylolethane, 1,1,1-trimethylolpropane and glycerol.

10. Composition according to one of the preceding claims, **characterized in that** the polyisocyanate is a diisocyanate.

11. Composition according to one of the preceding claims, **characterized in that** the aldehyde on which the polyaldimine B is based does not have a C-H moiety positioned α to the carbonyl group.

12. Composition according to one of the preceding claims, **characterized in that** the polyurethane prepolymer A and the polyaldimine B is present in a ratio of 0.1-1.1 equivalent of aldimine moieties per equivalent of isocyanate groups.

13. Process for preparing the composition according to one of Claims 1-12, comprising a step of preparing a polyaldimine by reacting an aldehyde with an amine in a manner known per se.

14. Use of the composition according to one of Claims 1-12 as an adhesive, sealant, coating or covering.

15. Arrangement **characterized in that** it comprises a composition according to one of Claims 1-12.

16. Article whose surface has been at least partly contacted with a composition according to one of Claims 1-12.

17. Process for bonding, **characterized in that** it comprises a step of contacting with a composition according to one of Claims 1-12.

18. Process for sealing, **characterized in that** it comprises a step of contacting with a composition according to one of Claims 1-12.

19. Process for coating, **characterized in that** it comprises a step of contacting with a composition according to one of Claims 1-12.

20. Process according to one of Claims 17-19, **characterized in that** it comprises an additional step of curing in the air.

21. Process according to one of Claims 17-20, **characterized in that** it further comprises a step of contacting with a hydrous component or an admixture thereof.

## Revendications

1. Composition comprenant
- au moins un prépolymère de polyuréthanne A ayant des groupes terminaux isocyanate, préparé à partir d'au moins un polyisocyanate avec au moins un polyol A1 et éventuellement au moins un polyol A2, tels que spécifiés ci-après :
A1 : polyoxyalkylènepolyol linéaire ayant un degré d'insaturation < 0,02 mEq/g ;
A2 : polyol en une quantité de 0 à 30 % en poids, de préférence de 0 à 20 % en poids, en particulier de 0 à 10 % en poids, par rapport à la quantité totale de A1 + A2 ; et
- au moins une polyaldimine B.

2. Composition selon la revendication 1, **caractérisée en ce que** le polyol A1 présente une masse moléculaire de 2000 à 30 000 g/mol, en particulier de 2000 à 20 000 g/mol.

3. Composition selon l'une des revendications précédentes, **caractérisée en ce que** le degré d'insaturation du polyol A1 est < 0,017 mEq/g.

4. Composition selon l'une des revendications précédentes, **caractérisée en ce que** le polyol A1 est un polyol préparé par catalyse DMC.

5. Composition selon l'une des revendications précédentes, **caractérisée en ce que** le polyol A1 est un polyoxypropylènediol ou un polyoxypropylènediol coiffé en bout par de l'OE.

6. Composition selon l'une des revendications précédentes, **caractérisée en ce que** le polyol A2 est un polyoxyalkylènepolyol ayant un degré d'insaturation > 0,04 mEq/mol.

7. Composition selon l'une des revendications précédentes, **caractérisée en ce que** le polyol A2 est un polyoxyalkylènepolyol ayant une masse moléculaire de 400 à 2000 g/mol.

8. Composition selon l'une des revendications précédentes, **caractérisée en ce que** le polyol A2 est un polyoxyalkylènepolyol ayant une fonctionnalité OH supérieure à 2 et allant jusqu'à environ 3.

9. Composition selon l'une des revendications précédentes, **caractérisée en ce que** le polyol A2 est choisi dans le groupe comprenant ce qui suit : 1,2-éthanediol, 1,2- et 1,3-propanediol, néopentylglycol, diéthylèneglycol, triéthylèneglycol, les dipropylèneglycols et tripropylèneglycols isomères, les butanediols, pentanediols, hexanediols, heptanediols, octanediols, nonanediols, décanediols, undécanediols isomères, 1,3- et 1,4-cyclohexanediméthanol, bisphénol A hydrogéné, 1,1,1-triméthyloléthane, 1,1,1-triméthylolpropane, et glycérol.

10. Composition selon l'une des revendications précédentes, **caractérisée en ce que** le polyisocyanate est un diisocyanate.

11. Composition selon l'une des revendications précédentes, **caractérisée en ce que** l'aldéhyde qui est à la base de la polyaldimine B ne présente en position α par rapport au groupe carbonyle aucun groupement C-H.

12. Composition selon l'une des revendications précédentes, **caractérisée en ce que** le prépolymère de polyuréthane A et la polyaldimine B sont présents selon un rapport de 0,1 à 1,1 équivalent de groupements aldimine par équivalent de groupes isocyanate.

13. Procédé de préparation de la composition selon l'une des revendications 1 à 12, comprenant une étape de préparation d'une polyaldimine par réaction d'un aldéhyde avec une amine d'une manière connue en soi.

14. Utilisation de la composition selon l'une des revendications 1 à 12 en tant qu'adhésif, matériau d'étanchéité, enduction ou revêtement.

15. Arrangement, **caractérisé en ce qu'**il contient une composition selon l'une des revendications 1 à 12.

16. Article dont la surface a été au moins partiellement mise en contact avec une composition selon l'une des revendications 1 à 12.

17. Procédé de collage, **caractérisé en ce qu'**il comprend une étape de mise en contact avec une composition selon l'une des revendications 1 à 12.

18. Procédé d'étanchéification, **caractérisé en ce qu'**il comprend une étape de mise en contact avec une composition selon l'une des revendications 1 à 12.

19. Procédé d'enduction, **caractérisé en ce qu'**il comprend une étape de mise en contact avec une composition selon l'une des revendications 1 à 12.

20. Procédé selon l'une des revendications 17 à 19, **caractérisé en ce qu'**il comprend une étape supplémentaire de durcissement à l'air.

21. Procédé selon l'une des revendications 17 à 20, **caractérisé en ce qu'**il comprend en outre une étape de mise en contact avec un composant contenant de l'eau, ou une addition de celui-ci.
